# EUROPÄISCHE PATENTANMELDUNG

(11) **EP 0 866 287 A2**
(43) Veröffentlichungstag der Anmeldung: **23.09.1998**
(21) Anmeldenummer: 98104836.6
(22) Anmeldetag: 17.03.1998
(51) Int. Cl.: F24J 2/26

(54) **Absorber für einen Flach-Sonnenkollektor**

(30) Priorität: 18.03.1997 DE 19711324
(71) Anmelder: thermosolar TSI AG, 8048 Zürich (CH)
(72) Erfinder: Kellner, Bernd, 93161 Eilsbrunn-Sinzing (DE)
(74) Vertreter: WILHELMS, KILIAN & PARTNER Patentanwälte

(57) **Zusammenfassung**

Gegenstand der Erfindung ist ein Absorber für einen Flach-Sonnenkollektor, wobei sich an der Unterseite des plattenartigen Absorbers über die Fläche hinweg eine mit diesem verbundene mäanderförmige Rohrleitung (2) für ein flüssiges Wärmetransportmedium erstreckt, bei welchem die mäanderförmige Rohrleitung (2) nur außerhalb der Mäanderbögen mit einer mehrere Mäanderwindungen überdeckenden Platte (1) des Absorbers durch Ultraschallschweißung verbunden ist.

## Beschreibung

Die Erfindung betrifft einen Absorber für einen Flach-Sonnenkollektor, wobei sich an der Unterseite des plattenartigen Absorbers über die Fläche hinweg eine mit diesem verbundene mäanderförmige Rohrleitung für ein flüssiges Wärmetransportmedium erstreckt.

Bei bekannten Absorbern sind nebeneinander verlaufende Stränge der Rohrleitung mit getrennten Plattenteilen des Absorbers verbunden, um mit Wärmeausdehnungsproblemen besser fertig zu werden.

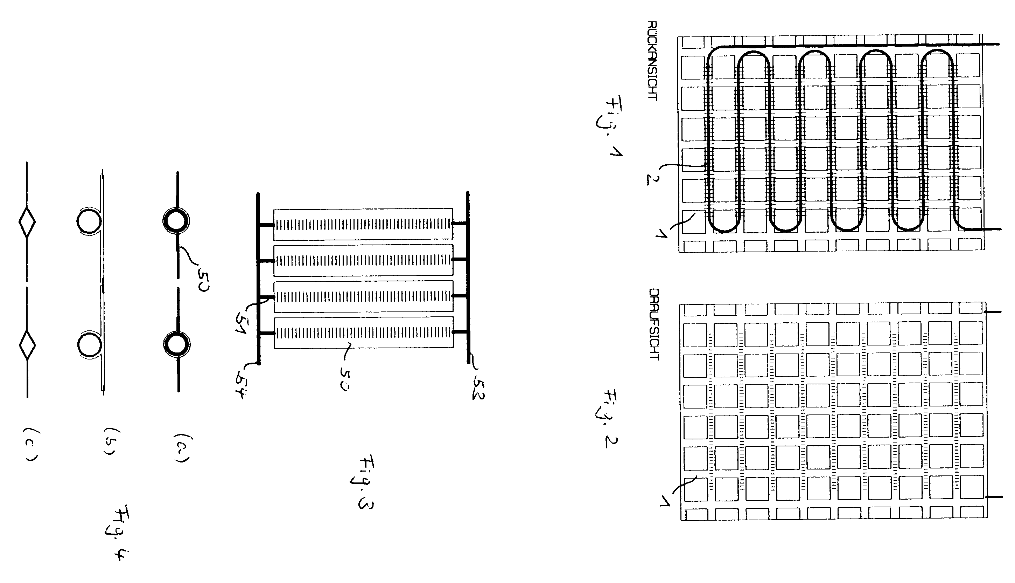

Fig. 3 zeigt einen nach diesem Prinzip aufgebauten bekannten Absorber. Getrennte streifenförmige, nebeneinander liegende Platten 50, die insgesamt den Absorber aufbauen, sind jeweils mit einem in Streifenrichtung verlaufenen Rohrstrang 51 verbunden bzw. versehen, wobei diese Rohrstränge 51 in außerhalb der Streifenplatten 50 befindlichen Sammelleitungen 53 und 54 für Vor- und Rücklauf zusammenlaufen.

Die Fig. 4(a), (b) und (c) zeigen den Absorber im Schnitt mit verschiedenen bekannten Arten der Verbindung und Ausbildung der Rohrstränge. Die Rohrstränge werden entweder zwischen den Lagen eines mehrschichten Absorbers ausgebildet (Fig. 4(a) und (c)) oder durch auf den Rohrstrang gerollte Fortsätze auf der Unterseite der Platte an diese angeschlossen (Fig. 4(b)).

Aufgabe der Erfindung ist es, einen mit geringerem Aufwand und damit geringeren Kosten herstellbaren Absorber hoher Dauerhaftigkeit und Güte zu schaffen.

Diese Aufgabe wird durch einen Absorber mit den Merkmalen des Patentanspruchs 1 gelöst.

Durch die Ultraschallverbindung der Rohrleitung mit der Absorberplatte nur im Bereich zwischen den Windungsbögen wird die notwendige Dehnungsmöglichkeit, ohne Beschädigung der Verbindung zwischen Rohrleitung und Absorberplatte im auftretenden Temperaturbereich zwischen -30°C und +300°C gewährleistet. Auch wird durch die Ultraschallschweißung keine Zerstörung der empfindlichen Absorberbeschichtung auf der Oberseite bewirkt.

Vorzugsweise ist das Blech der Absorberplatte, die bevorzugt aus Aluminium besteht, profiliert. Dies ermöglicht die Verwendung von für die Ultraschallschweißung günstigem dünnem Material. Desweiteren werden Verspannungen durch die Profilierung kompensiert.

Eine Ausführungsform der Erfindung wird im folgenden anhand der beigefügten Zeichnung beschrieben. Auf dieser zeigt
Fig. 1 einen Absorber gemäß einer Ausführungsform der Erfindung von hinten,
Fig. 2 den Absorber der Fig. 1 von vorne,
Fig. 3 einen bekannten Absorber vorne, und
Fig. 4(a) bis (c) bekannte Verbindungs- bzw. Ausbildungsweisen von Absorberplatte und Rohrleitung.

Gemäß den Fig. 1 und 2 ist auf der Rückseite einer hier in einem quadratischen Raster profilierten Absorberplatte 1 eine mäanderförmig ausgelegte Rohrleitung 2 durch Ultraschallschweißung angebracht. Im wesentlichen gerade, und im wesentlichen parallele Züge der Rohrleitung sind an den Enden durch Bögen miteinander verbunden.

Die Rohrleitung 2 ist mit der Absorberplatte 1 nur außerhalb der Bögen des Mäanders ultraschallverschweißt. Die Verschweißungsbereiche sind die in Fig. 1 und Fig. 2 schraffiert angedeuteten Bereiche, längs derer die Rohrleitung im wesentlichen gerade verläuft. Hierdurch wird die notwendige Dehnungsmöglichkeit in einem auftretenden Temperaturbereich zwischen -30° und +300°C trotz einteiliger Ausbildung der bevorzugt aus Aluminium bestehenden Absorberplatte und auch bei unterschiedlichen Materialien von Absorberplatte und Rohrleitung erreicht.

Desweiteren sorgt auch die Profilierung der Absorberplatte für eine Kompensation bzw. Vermeidung von Verspannungen. Sie ermöglicht eine dünne Ausbildung der Absorberplatte in einer Stärke zwischen 0,4 - 0,5 mm.

Ein bevorzugtes Material für die Rohrleitung ist neben Aluminium Kupfer.

## Patentansprüche

1. Absorber für einen Flach-Sonnenkollektor, wobei sich an der Unterseite des plattenartigen Absorbers über die Fläche hinweg eine mit diesem verbundene mäanderförmige Rohrleitung (2) für ein flüssiges Wärmetransportmedium erstreckt, dadurch gekennzeichnet, daß die mäanderförmige Rohrleitung (2) nur außerhalb der Mäanderbögen mit einer mehrere Mäanderwindungen überdeckenden Platte (1) des Absorbers durch Ultraschallschweißung verbunden ist.

2. Absorber nach Anspruch 1, dadurch gekennzeichnet, daß die Absorberplatte (1) profiliert ist.
